# EUROPEAN PATENT APPLICATION

(11) **EP 3 943 863 A1**
(43) Date of publication of application: **26.01.2022**
(21) Application number: 20461550.4
(22) Date of filing: 23.07.2020
(51) Int. Cl.: F28D 9/00, F28F 3/02, F28F 3/06, F28F 13/06

(54) **A HEAT EXCHANGER**

(71) Applicant: Valeo Autosystemy SP. Z.O.O., 32-050 Skawina (PL)
(72) Inventor: JUGOWICZ, Andrzej, 32 050 Skawina (PL); LIPOWSKI, Mateusz, 32 050 Skawina (PL); WIDZYK, Lukasz, 32 050 Skawina (PL); BEDEK, Adam, 32 050 Skawina (PL)
(74) Representative: Valeo Systèmes Thermiques

(57) **Abstract**

A heat exchanger **100** includes a housing **110,** a heat exchanger core **120** received in the housing **110,** a first tank **112** and a second tank **114.** The heat exchanger core **120** includes at least one heat exchange element **122** defining air flow passages and at least one turbulator **124** including a first portion **124a** with a first wave pattern **125a** and defining coolant flow passages next to the air flow passages. The first tank **112** supplies a coolant to an interior **111** of the housing **110.** The second tank **114** collects the coolant from the interior the housing **110.** The turbulator **124** includes a second portion 1**24b** with a first flow restrictor **126** configured to partially restrict coolant flow with respect to the first portion **124a** of the turbulator **124** with the first wave pattern 1**25a.**

## Description

The present invention relates to a heat exchanger, in particular to a water charge air cooler, hereinafter referred to as WCAC for a vehicle.

In order to achieve high volumetric efficiency, improved performance and less emissions, air introduced in a combustion chamber of an internal combustion engine is compressed using a turbocharger or supercharger. However, charged air leaving the turbocharger or supercharger is at elevated temperature that is not desirable as high temperature air entering the combustion chamber can cause knocking in diesel engine and uncontrolled combustion in petrol engine. The WCAC is used to cool down the charged air before it is introduced into the combustion chamber. Inducting cooled charge air into the combustion chamber improves the performance and the volumetric efficiency of the engine, reduces emissions and prevents the problems arising due to introduction of high temperature air in the combustion chamber.

The WCAC may comprise a housing, a first tank and a second tank. The first tank and the second tank are fluidly communicated with an interior of the housing by a first opening and a second opening, respectively. The housing receives a plurality of heat exchange elements, for example, tubes or plates defining air flow passages through which air to be cooled flows. In case the heat exchange elements are tubes, the air flow passages are formed within the tubes. In case the heat exchange elements are plates, the air flow passages are formed between adjacent plates. The air flow passages formed by the heat exchange elements are separated by turbulators, particularly, the array of heat exchange elements and the turbulator are alternately arranged to form a heat exchanger core. The coolant is received inside the housing and flows through the spacing between consecutive heat exchange elements separated by tabulators to define coolant flow passage. With such arrangement of the heat exchange elements separated by tabulators, air flowing though the heat exchange elements and coolant flowing through the spacing between the heat exchanger elements, the coolant flow passages are adjacent to the air flow passages. Such configuration enables heat exchanger between the air flowing through the air flow passages and coolant flowing through the coolant flow passages. The turbulators are formed by stamping of a metal plate to form multiple wave pattern of sinusoidal or square form. Generally, the pitch of the wave pattern of sinusoidal or square pattern remains uniform and forms coolant flow passages. The first opening is for ingress of coolant inside the housing and around the air flow passages for extracting heat stored in the air flowing through the air flow passages. The second opening is for egress of the coolant from the housing after the coolant had extracted heat from air flowing through the air flow passages.

Generally, the coolant tends to follow the shortest path between the first opening and the second opening and there are certain regions or sections of the heat exchanger core through which there is either no flow or limited flow of the coolant, such regions or sections of the heat exchanger core are referred to as "dead zones". Consequently, the coolant egresses from the second opening of the housing while extracting limited amount of heat from air flowing through the air flow passages. Due to such tendency of the coolant to follow the shortest path between the first opening and the second opening and non-uniform distribution of coolant across a heat exchanger core, particularly, the air flow passages, dead zones are formed in the heat exchanger core. Further, there may be insufficient or no contact and heat transfer between air flowing through the air flow passages and the coolant surrounding the air flow passages and the coolant escapes through the second opening with limited extraction of heat from the air flowing through the air flow passages. Accordingly, the thermal efficiency and performance of the WCAC is drastically reduced.

Prior art documents disclose arrangements for uniform distribution of the coolant flow across the air flow passages and which try to prevent formation of dead zones inside the heat exchanger core disposed inside the housing. However, such arrangements require additional components such as baffles that are either disposed within the core or disposed within the tanks. However, using such additional components increase overall cost of the heat exchanger and the heat exchangers configured with baffles are difficult to manufacture. Further, such baffles may intrude into the interior of the housing and occupy space, thereby giving rise to packaging issues, reducing the number of heat exchange elements receivable inside the housing and adversely affecting heat exchange capacity of the WCAC. Further, the configuration of the WCAC, particularly, the orientation of the heat exchanger elements, relative position of the first opening and the second opening with respect to the heat exchange tubes varies and the arrangement for addressing the issue of dead zone formation is required to be flexible to manufacture considering the configuration of the WCAC.

Accordingly, there is a need for a WCAC that obviates the problem of inefficient heat exchange and reduced efficiency and performance faced by conventional WCAC due to formation of dead zones in the heat exchanger core thereof. Further, there is a need for an arrangement for uniformly distributing a coolant across the core, particularly, the heat exchange elements received inside a heat exchange housing to prevent formation of dead zones without intruding inside the housing and without affecting the number of heat exchanger elements receivable inside the housing. Further, there is a need for an arrangement for preventing formation of dead zone inside a housing of a WCAC that provides flexibility of being configured based on the WCAC's configuration, particularly, based on orientation of heat exchange elements, relative position of first opening and second opening with respect to the heat exchange elements.

An object of the present invention is to provide a WCAC that obviates the problem of inefficient heat exchange and reduced performance faced by conventional WCAC due to formation of dead zones in the heat exchanger core thereof.

Another object of the present invention is to provide a WCAC with an arrangement to uniformly distribute a coolant between heat exchange elements of a heat exchanger core received inside a housing of the WCAC to prevent formation of dead zones.

Yet another object of the present invention is to provide a WCAC with an arrangement to uniformly distribute a coolant between heat exchange elements of a heat exchanger core received inside a housing of the WCAC, without use of any intruding element such as baffle inside the housing.

Another object of the present invention is to provide a WCAC with an arrangement to uniformly distribute a coolant between heat exchange elements of a heat exchanger core received inside a housing of the WCAC without affecting the number of heat exchanger elements receivable inside the housing.

Still another object of the present invention is to provide a WCAC with an arrangement to prevent dead zone formation inside a heat exchanger core disposed in a housing of the WCAC that provides flexibility to be configured based on the WCAC's configuration.

Yet another object of the present invention is to provide a WCAC configured with an arrangement to prevent dead zone formation inside a heat exchanger core disposed in the housing of the WCAC that is simple in configuration and convenient to manufacture.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A heat exchanger for a vehicle is disclosed in accordance with an embodiment of the present invention. The heat exchanger includes a housing, a heat exchanger core, a first tank and a second tank. The heat exchanger core is received in the housing. The heat exchanger core includes at least one heat exchange element and at least one turbulator. The heat exchange element defines air flow passages. The turbulator includes a first portion with a first wave pattern, and arranged with respect to the heat exchanger element to define coolant flow passages next to the air flow passages. The first tank is in fluid communication with an interior of the housing via a first opening to supply a coolant to the interior of the housing. The second tank is spaced from the first tank and is in fluid communication with the interior of the housing via a second opening to collect the coolant from the interior the housing. The turbulator includes a second portion with a first flow restrictor configured to partially restrict coolant flow with respect to the first portion of the turbulator with the first wave pattern.

Optionally, the turbulator includes a third portion with a second flow restrictor.

Generally, the first flow restrictor and the second flow restrictor are portions of the turbulator with a second wave pattern and a third wave pattern respectively, the first wave pattern, the second wave pattern and the third wave pattern are of different character with respect to each other.

Particularly, the second wave pattern and the third wave pattern are of at least one of reduced pitch, reduced amplitude and increased thickness with respect to the first wave pattern of the first portion of the turbulator in the remaining section of the heat exchange core.

Alternatively, the at least one of the first flow restrictor and the second flow restrictor is in a form of either one of perforated plate and sieve that partially restricts coolant flow with respect to the first portion with the first wave pattern.

Specifically, at least one of the first flow restrictor and the second flow restrictor are of aluminium and are secured to the first portions of the turbulators by brazing.

Alternatively, the at least one of the first flow restrictor and the second flow restrictor are removably mounted on the first portions of the turbulators.

Generally, the at least one of the first flow restrictor and the second flow restrictor is disposed along shortest fluid flow path between the first opening and the second opening.

Preferably, each of the turbulators along with at least one of the first flow restrictor and the second flow restrictor integrally formed therewith is formed by stamping of a single sheet.

Generally, the first flow restrictor and the second flow restrictor form restricted coolant flow passages as compared to the first portion of the turbulators in the remaining section of the heat exchange core.

Particularly, the heat exchange elements and the turbulators are of aluminium.

More specifically, the turbulators are secured to the heat exchange elements by brazing.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1** illustrates a schematic representation of a conventional heat exchanger, particularly a conventional WCAC;
**FIG. 2** illustrates a schematic representation of a WCAC in accordance with an embodiment of the present invention;
**FIG. 3** illustrates a schematic representation depicting cross section of a core of the WCAC of **FIG. 2** in accordance with an embodiment of the present invention; and
**FIG. 4** illustrates a schematic representation depicting cross section of a core of the WCAC of **FIG. 2** in accordance with another embodiment of the present invention.

It must be noted that the figures disclose the invention in a detailed enough way to be implemented, said figures helping to better define the invention if needs be.

The present invention envisages a heat exchanger, particularly, a Water Charge Air Cooler, hereinafter referred to as WCAC for a vehicle. The WCAC includes a housing, a WCAC's core, a first tank and a second tank. The WCAC's core is received in the housing. The WCAC's core includes at least one heat exchanger element and at least one turbulator. Specifically, the WCAC's core includes a plurality of heat exchange elements and a plurality of turbulators. The plurality of heat exchange elements define air flow passages. Each of the plurality of turbulators include a first portion with a first wave pattern, the turbulators are arranged with respect to the heat exchanger elements to define coolant flow passages next to the air flow passages. The first tank is in fluid communication with an interior of the housing via a first opening to supply a coolant to the coolant flow passages. The second tank is spaced from the first tank and is in fluid communication with the interior of the housing via a second opening to collect the coolant from the interior the housing, particularly, from coolant flow passages after the coolant had extracted heat from hot air flowing through the air flow passages. At least one turbulator further includes a second portion with a first flow restrictor configured to partially restrict coolant flow with respect to the first portions of the turbulators with the first wave pattern. Although, the present invention is explained with example of WCAC in forthcoming description and the accompanying drawings, however, the present invention is also applicable in any heat exchanger that involves turbulators or fins that can be modified to manipulate coolant flow path within the core to prevent formation of dead zones inside the heat exchanger core.

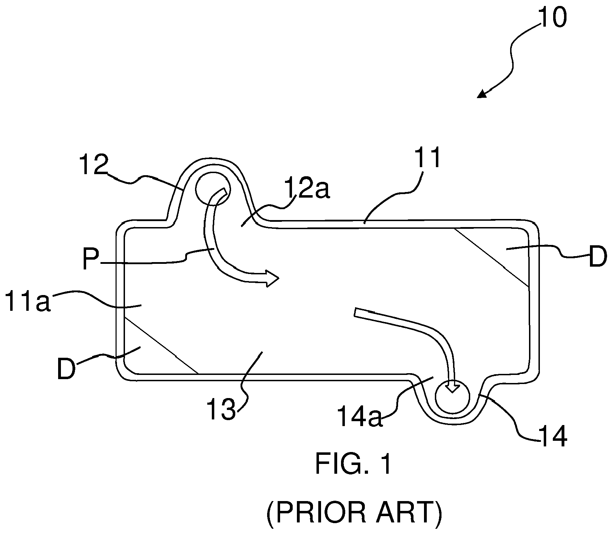

**FIG. 1** illustrates a schematic representation of a conventional WCAC **10.** The conventional WCAC **10** includes a first tank **12** and a second tank **14** that are in fluid communication with an interior **11a** of a housing **11** via a first opening **12a** and a second opening **14a** respectively. In case of the conventional WCAC **10,** a coolant entering the housing from the first tank **12** through the first opening **12a** follows a shortest flow path **P** between the first opening **12a** and the second opening **14a.** Due to such tendency of the coolant to follow the shortest path **P** between the first opening **12a** and the second opening **14a,** there is a non-uniform distribution of coolant across the heat exchanger core **13,** particularly, the air flow passages, accordingly, there is formation of dead zones **D** in the heat exchanger core **13.** Further, due to such tendency of the coolant to exit the heat exchanger through the second opening **14a** without sufficient contact with heat exchange elements and heat exchange with air flowing through the air flow passages, there is insufficient contact and heat exchange or heat transfer between air flowing through the air flow passages and the coolant. As a result, the coolant exits the heat exchanger through the second opening **14a** without extracting heat from the air flowing through the air flow passages. Accordingly, the thermal efficiency and performance of the conventional WCAC **10** is drastically reduced.

To overcome the drawbacks associated with conventional WCAC, a heat exchanger, particularly, a WCAC **100** is disclosed in accordance with an embodiment of the present invention. Although, the forthcoming description and the accompanying drawings explain the present invention with example of the WCAC, however, the invention is also applicable to other heat exchangers as well.

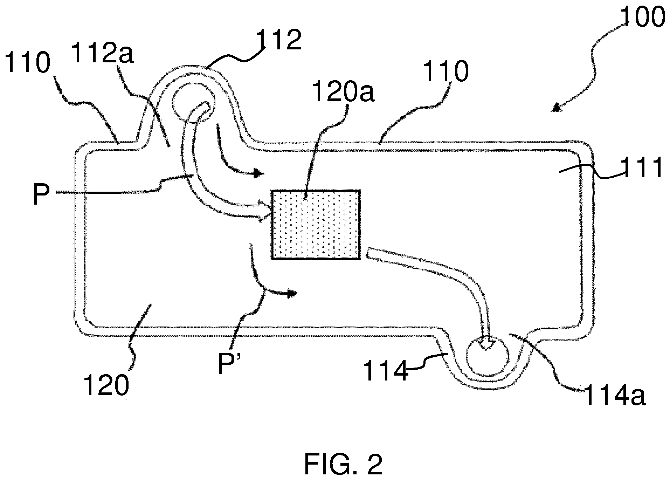

Referring to **FIG. 2** of the accompanying drawings, a schematic representation of the heat exchanger, particularly, the WCAC **100** in accordance with an embodiment of the present invention is illustrated. The WCAC **100** includes a housing **110,** a first tank **112,** a second tank **114a** and a heat exchanger core **120.**

The housing **110** includes a top wall, a bottom wall, a pair of lateral side-walls, and a pair of front and rear side walls connecting the top wall and the bottom wall and the side walls to define an enclosure. Generally, the housing **110** is having a modular configuration to provide access to the interior of the housing **110** to permit receiving of the elements such as for example the heat exchanger core **120** into the housing **110** and removal of the heat exchanger core **120** from inside the housing **110** for maintenance or replacement of the heat exchanger core **120.**

The first tank **112** and the second tank **114** are either integral with the housing **110** or separate from the housing **110** and assembled thereto. For example, the first tank **112** and the second tank **114** are integral with any of the walls of the housing **110.** More specifically, the first tank **112** and the second tank **114** are in the form of cavities formed on opposite walls of the housing **110** and the interface of the cavities acts as a first opening **112a** and a second opening **114a.** For, example, the top wall of the housing **110** includes the first tank **112** and the bottom wall of the housing **110** includes the second tank **114** formed thereon as illustrated in **FIG. 2****.** In another example, the first tank **112** and the second tank **114** are separate from the housing **110.** The first tank **112** and the second tank **114** are having closed ends and open ends connected by sidewalls of the tank **114** to define an enclosure. The open ends of the first tank **112** and the second tank **114** are aligned with the respective first opening and the second opening formed on any of the walls of the housing **110.** However, the present invention is not limited to any particular configuration of the first tank **112** and the second tank **114** and the way in which the first tank **112** and the second tank **114** are in fluid communication with an interior **111** of the housing **110.**

Further, the first tank **112** and the second tank **114** are extending along at least a portion of a width of the housing **110.** The first tank **112,** particularly, an interior of the first tank **112** is in fluid communication with the interior **111** of the housing **110** via the first opening **112a** to supply coolant to the interior of the housing **110.** The coolant received inside the housing **110** flows through the coolant flow passages formed next to the air flow passages defined by a plurality of heat exchange elements **122.** The second tank **114** is spaced from the first tank **112** and is in fluid communication with the interior **111** of the housing **110** via the second opening **114a.** The second tank **114** collects the coolant from the interior **111** of the housing **110,** particularly, from the coolant flow passages formed next to the air flow passages after the coolant had extracted heat from air flowing through the air flow passages. More specifically, the first opening **112a** is for ingress of the coolant inside the interior **111** of the housing **110** from the first tank **112** and around the air flow passages defined by the heat exchange elements **122.** Similarly, the second tank **114** spaced from the first tank **112** is in fluid communication with the interior **111** of the housing **110** via the second opening **114a** to collect the coolant from the interior the housing **110.** The second opening **114a** is for the egress of coolant from the interior **111** of the housing **110** to the second tank **114,** after the coolant had extracted heat from air flowing through the air flow passages defined by the heat exchange elements **122.** The first tank **112** along with the first opening **112a** and the second tank **114** along with the second opening **114a** can either be on opposite sides of the housing **110** of the WCAC **100** as illustrated in **FIG. 2** or on the same side of the housing **110** of the WCAC **100.**

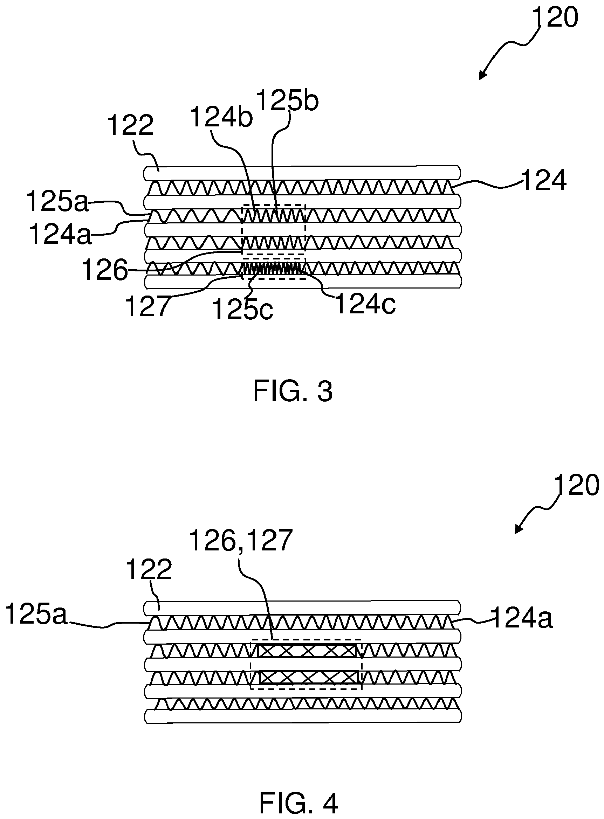

The heat exchanger core **120** is received in the housing **110.** The heat exchanger core **120** includes at least one heat exchanger element **122,** preferably, multiple heat exchange elements **122** and at least one turbulator **124** preferably, a plurality of turbulators **124.** The heat exchange elements **122** and the turbulators **124** are alternately arranged with respect to each other. **FIG. 3** and **FIG. 4** illustrate sectional views of the heat exchanger core **120** in accordance to different embodiments of the present invention. Although, in the **FIG. 3** and **FIG. 4****,** the heat exchange elements **122** are depicted as heat exchange tubes, wherein interior of the heat exchange tubes define air flow passages through which air to be cooled flows. However, the heat exchange elements **122** can also be in the form of heat exchange plates, wherein space between adjacent heat exchange plates define air flow passages. Each of the turbulators **124** includes a first portion **124a** with a first wave pattern **125a.** The turbulators **124** are alternatively arranged with respect to the heat exchanger elements **122** to define coolant flow passages next to the air flow passages. The turbulators **124** disposed next to the the heat exchange elements **122** enhance turbulence in the coolant flowing next to the heat exchange elements **122** and improve the surface contact between the heat exchange elements **122** and the coolant flowing next to the heat exchange elements **122.** The first wave pattern **125a** of the first portion **124a** is either in square form of sinusoidal form. At least one turbulator **124** further includes a second portion **124b** with a first flow restrictor **126** configured to partially restrict coolant flow with respect to the first portions **124a** of the turbulators **124** with the first wave pattern **125a.**

Optionally, the turbulator **124** includes a third portion **124c** with a second flow restrictor **127.**

At least one of the first flow restrictor **126** and the second flow restrictor **127** is disposed along shortest fluid flow path between the first opening **112a** and the second opening **114a.** At least one of the first flow restrictor **126** and the second flow restrictor **127** define at least one section of the heat exchange core **120** through which there is limited coolant flow compared to coolant flow through the remaining heat exchanger core **120.** The first flow restrictor **126** and the second flow restrictor **127** are portions of the at least one turbulator **124** with a second wave pattern **125b** and a third wave pattern **125c** respectively. The second wave pattern **125b** and the third wave pattern **125c** are generally formed on the same turbulator, however, for better understanding the second wave pattern **125b** and the third wave pattern **125c** are depicted formed on different turbulators in the **FIG. 3**. The first wave pattern **125a,** the second wave pattern **125b** and the third wave pattern **125c** are of different character with respect to each other. More specifically, the second wave pattern **125b** and the third wave pattern **125c** are of at least one of reduced pitch, reduced amplitude and increased thickness with respect to the first wave pattern **125a** of the first portion **124a** of the turbulator **124** in the remaining section of the heat exchange core **120.** However, the present invention is not limited to any particular configuration of the second wave pattern **125b** and the third wave pattern **125c,** as far as the second wave pattern **125b** and the third wave pattern **125c** is capable of partially restricting coolant flow through the first flow restrictor **126** and the second flow restrictor **127** respectively. With such configuration, the coolant flow through shortest path between the first opening **112a** and the second opening **114a** is limited. Specifically, most of the coolant by-pass at least one of the first flow restrictor **126** and the second flow restrictor **127.** More specifically at least one of the first flow restrictor **126** and the second flow restrictor **127** changes the coolant flow path inside the heat exchanger core **120** and prevents the coolant from escaping from the second opening **114a** without extracting heat from the heat exchange elements **122** disposed away from the shortest fluid flow path. Instead of most of the coolant flowing through coolant flow passages next to heat exchange elements along the shortest path between the first opening **112a** and the second opening **114a,** the coolant flows through coolant flow passages next to heat exchange elements disposed away from the shortest path between the first opening **112a** and the second opening **114a.** Accordingly, the formation of the dead zones in the heat exchanger core **120** is prevented. With such configuration, the coolant is uniformly distributed across the heat exchange core **120** without use of any intruding element such as baffle inside the housing **110** and without affecting the number of the heat exchanger elements **122** receivable inside the housing **110.**

In accordance with another embodiment as illustrated in **FIG. 4**, the at least one of the first flow restrictor **126** and the second flow restrictor **127** is in the form of either one of perforated plate and sieve that partially restricts coolant flow with respect to the first portion **124a** with the first wave pattern **125a.** Specifically, the first flow restrictor **126** and the second flow restrictor **127** may be of any configuration that enable the first flow restrictor **126** and the second flow restrictor **127** to partially restrict coolant flow there through with respect to the first portions **124a** of the turbulators **124** with the first wave pattern **125a.** In one example, the turbulators **124** are of aluminium and at least one of the first flow restrictor **126** and the second flow restrictor **127** in the form of either one of perforated plate and sieve of aluminium are secured to the first portions **124a** of the turbulators **124** by brazing. Alternatively, at least one of the first flow restrictor **126** and the second flow restrictor **127** in the form of either one of perforated plate and sieve of aluminium are removably mounted on the first portions **124a** of the turbulators **124.**

Generally, the heat exchange elements **122** and the turbulators **124** are of aluminium. The turbulators **124** are secured to the heat exchange elements **122** by brazing.

Each of the turbulators **124** along with at least one of the first flow restrictor **126** and the second flow restrictor **127** integrally formed therewith is formed by stamping of a single sheet. With such configuration, the entire turbulator **124** along with at least one of the first flow restrictor **126** and the second flow restrictor **127** is formed by a single step instead of being formed separately, wherein at least one of the first flow restrictor **126** and the second flow restrictor **127** is formed separately and the remaining portion of the turbulator is formed separately and both are joined. More specifically, at least one of the first flow restrictor **126** and the second flow restrictor **127** is integrally formed with the turbulator **124.**

The placement of at least one of the first flow restrictor **126** and the second flow restrictor **127** inside the heat exchanger core **120** is based on the location of the first opening **112a** and the second opening **114a.** Such configuration, provides flexibility to configure the at least one reduced coolant flow section of the heat exchanger core **120** based on the WCAC's configuration.

Several modifications and improvement might be applied by the person skilled in the art to a heat exchanger, as disclosed above and such modifications and improvements will still be considered within the scope and ambit of the present invention, as long as the WCAC includes a housing, a heat exchanger core, a first tank and a second tank. The heat exchanger core is received in the housing. The heat exchanger core includes at least one heat exchange element and at least one turbulator. The heat exchange element define air flow passages. The turbulator includes a first portion with a first wave pattern and arranged with respect to the heat exchanger element to define coolant flow passages next to the air flow passages. The first tank is in fluid communication with an interior of the housing via a first opening to supply a coolant to the interior of the housing. The second tank is spaced from the first tank and is in fluid communication with the interior of the housing via a second opening to collect the coolant from the interior the housing. The turbulator includes a second portion with a first flow restrictor configured to partially restrict coolant flow with respect to the first portion of the turbulator with the first wave pattern.

## Claims

1. A heat exchanger (100) for a vehicle, comprising:
• a housing (110);
• a heat exchanger core (120) adapted to be received in the housing (110), the heat exchanger core (120) comprising:
o at least one heat exchange element (122) defining air flow passages; and
o at least one turbulator (124) comprising a first portion (124a) with a first wave pattern (125a), and arranged with respect to the heat exchange element (122) to define coolant flow passages next to the air flow passages;
• a first tank (112) adapted to be in fluid communication with an interior of the housing (110) via a first opening (112a) to supply a coolant to the interior of the housing; and
• a second tank (114) spaced from the first tank (112) and adapted to be in fluid communication with the interior of the housing (110) via a second opening (114a) to collect the coolant from the interior the housing (110),
**characterized in that** the turbulator (124) further comprises a second portion (124b) with a first flow restrictor (126) configured to partially restrict coolant flow with respect to the first portion (124a) of the turbulator (124) with the first wave pattern (125a).

2. The heat exchanger (100) as claimed in the previous claim, wherein the turbulator (124) comprises a third portion (124c) with a second flow restrictor (127).

3. The heat exchanger (100) as claimed in previous claim, wherein the first flow restrictor (126) and the second flow restrictor (127) are portions of the turbulator (124) with a second wave pattern (125b) and a third wave pattern (125c) respectively, the first wave pattern (125a), the second wave pattern (125b) and the third wave pattern (125c) are of different character with respect to each other.

4. The heat exchanger (100) as claimed in claim 3, wherein the second wave pattern (125b) and the third wave pattern (125c) are of at least one of reduced pitch, reduced amplitude and increased thickness with respect to the first wave pattern (125a) of the first portion (124a) of the turbulator (124) in the remaining section of the heat exchange core (120).

5. The heat exchanger (100) as claimed in claim 2, wherein at least one of the first flow restrictor (126) and the second flow restrictor (127) is in a form of either one of perforated plate and sieve adapted to partially restrict coolant flow with respect to the first portion (124a) with the first wave pattern (125a).

6. The heat exchanger (100) as claimed in the previous claim, wherein at least one of the first flow restrictor (126) and the second flow restrictor (127) are of aluminium and are secured to the first portions (124a) of the turbulators (124) by brazing.

7. The heat exchanger (100) as claimed in the claim 4, wherein at least one of the first flow restrictor (126) and the second flow restrictor (127) are removably mounted on the first portions (124a) of the turbulators (124).

8. The heat exchanger (100) as claimed in the claim 2, wherein the at least one of the first flow restrictor (126) and the second flow restrictor (127) is disposed along shortest fluid flow path between the first opening (112a) and the second opening (114a).

9. The heat exchanger (100) as claimed in claim 2, wherein each of the turbulators (124) along with at least one of the first flow restrictor (126) and the second flow restrictor (127) integrally formed therewith is formed by stamping of a single sheet.

10. The heat exchanger (100) as claimed in claim 2 wherein the first flow restrictor (126) and the second flow restrictor (127) form restricted coolant flow passages as compared to the first portion (124a) of the turbulators (124) in the remaining section of the heat exchange core (120).

11. The heat exchanger (100) as claimed in any of the preceding claims, wherein the plurality of heat exchange elements (122) and the turbulators (124) are of aluminium.

12. The heat exchanger (100) as claimed in the previous claim, wherein the turbulators (124) are secured to the respective heat exchange elements (122) by brazing.
